# EUROPÄISCHE PATENTSCHRIFT

(11) **EP 1 085 187 B1**
(45) Veröffentlichungstag und Bekanntmachung des Hinweises auf die Patenterteilung: **08.03.2006**
(21) Anmeldenummer: 00116976.2
(22) Anmeldetag: 08.08.2000
(51) Int. Cl.: F02D 23/02, F02D 41/40, F02D 41/00

(54) **Verfahren und Vorrichtung zur Erhöhung des Drehmoments bei einer direkteinspritzenden Brennkraftmaschine mit einem Abgasturbolader**
Method and device for the increase of the torque in a direct injection internal-combustion engine with exhaust turbo-charger
Méthode et dispositif pour augmenter le couple d'un moteur à combustion interne à injection directe avec le turbocompresseur d'échappement

(30) Priorität: 15.09.1999 DE 19944190
(43) Veröffentlichungstag der Anmeldung: 21.03.2001
(73) Patentinhaber: ROBERT BOSCH GMBH, 70442 Stuttgart (DE)
(72) Erfinder: Baeuerle, Michael, 71706 Markgroeningen (DE); Ries-Müller, Klaus, 74906 Bad Rappenau (DE)

(56) Entgegenhaltungen:
- EP-A- 0 768 456
- EP-A- 0 933 519
- DE-A- 4 439 573
- FR-A- 2 775 316

## Beschreibung

### Stand der Technik

Die vorliegende Erfindung betrifft ein Verfahren und eine Vorrichtung zur Erhöhung des Drehmoments bei einer direkteinspritzenden Brennkraftmaschine mit einem Abgasturbolader gemäß dem Oberbegriff der Ansprüche 1 und 7.

In der BP 0.621 400 Al ist eine direkteinspritzende Brennkraftmaschine beschrieben, bei der zur Reduzierung der Stickoxide im Abgas zusätzlich zu einer Primäreinspritzung eine Nacheinspritzung frühestens im Bereich der Endphase der Verbrennung, nachdem die Kurbelwelle ihren oberen Totpunkt erreicht hat, durchgeführt wird. Dabei wird der Zeitpunkt der Nacheinspritzung so, gewählt, daß nur ein Teil des nacheingespritzten Kraftstoffes verbrannt wird. Der restliche Kraftstoff bleibt unverbrannt und steht damit als aufbereitetes Reduktionsmittel im Katalysator zur Verfügung.

Die FR 2 775 316 beschreibt eine direkteinspritzende Brennkraftmaschine mit Abgasturboaufladung bei der eine Nacheinspritzung von Kraftstoff in mindestens einen Zylinder erfolgt, um Beschleunigungsphasen aus niedrigen Drehzahlbereichen zu verbessern.

Die DE 44 39 573 beschreibt eine direkteinspritzende Brennkraftmaschine mit Abgasturboaufladung bei der im Leerlaufbetrieb eine Nacheinspritzung von Kraftstoff in die Zylinder erfolgt, um eine Drehzahlerhöhung des Abgasturboladers zu erreichen und so ein gutes Lastannahmeverhalten zu erzielen.

Brennkraftmaschinen mit Abgasturboaufladüng, insbesondere solche mit hoher Aufladung und ohne variable Geometrie der Turbine des Abgasturboladers, zeigen beim Anfahren oft eine

Drehmomentschwäche. Das liegt daran, daß der bei einem Anfahrvorgang vorhandene zu geringe Abgasmassenstrom der Brennkraftmaschine zu einem schlechten Wirkungsgrad sowohl der Turbine als auch des Verdichters des Abgasturboladers führt. Die Folge davon ist ein schwacher Ladedruckaufbau mit geringem Drehmomentenangebot. In extremen Fahrsituationen - z.B. steile Paßfahrt in großer Höhe und zusätzlich aktivem Klimakompressor - kann dann sogar kein Anfahren mehr möglich sein.

Der Erfindung liegt daher die Aufgabe zugrunde, ein Verfahren und eine Vorrichtung anzugeben, womit während eines Anfahrvorganges der Wirkungsgrad des Abgasturboladers und damit das Ansprechverhalten der Brennkraftmaschine verbessert wird.

### Vorteile der Erfindung

Die genannte Aufgabe wird mit den Merkmalen der Ansprüche 1 und 7 dadurch gelöst, daß vor einem Anfahrvorgang neben einer Primäreinspritzung eine Nacheinspritzung veranlaßt wird. Damit wird die Abgasenthalpie für die Turbine des Abgastuboladers unmittelbar vor und während des Anfahrens nachhaltig erhöht, so daß das Ansprechverhalten der Maschine bei einer Drehmoment- oder Leistungsanforderung infolge des gesteigerten Ladedrucks signifikant verbessert wird.

Die Nacheinspritzung wird dann initiiert, sobald ein oder mehrere Aktionen des Fahrers erkannt werden, die auf einen bevorstehenden Anfahrvorgang hinweisen. Als Anzeichen für einen bevorstehenden Anfahrvorgang kann aufgefaßt werden, wenn der Fahrer während des Leerlaufs der Brennkraftmaschine einen Getriebegang einlegt oder das Bremspedal freigibt, was am Ausschalten des Bremslichts erkennbar ist, oder, bei einem automatischen Getriebe, eine Fahrstufe einschaltet.

Vorteilhafte Weiterbildungen der Erfindung gehen aus den Unteransprüchen hervor.

Eine besonders stake Erhöhung der Abgasenthalpie wird dadurch erreicht, daß die Nacheinspritzung gegen Ende des Expansionshubes in ein oder mehreren Zylindern veranlaßt wird.

Zweckmäßigerweise wird vor der Nacheinspritzung in den betroffenen Zylindern ein Luftüberschuß erzeugt, so daß das Vohandensein eines brennbaren Gemisches in den Zylindern sicher gestellt ist.

Die Nacheinspritzung sollte beendet werden, wenn der Ladedruck eine vorgegebene Schwelle überschreitet.

Um eine zu starke mechanische oder thermische Belastung des Abgasturboladers und/oder des Motors zu vermeiden, wird die Nacheinspritzung abgebrochen, wenn nach Ablauf einer vorgegebenen Zeit, nachdem vom Fahrer Maßnahmen für einen Anfahrvorgang ergriffen worden sind, kein Anfahrvorgang erfolgt.

Es ist zweckmäßig, daß während der Nacheinspritzung die Ein- und Auslaßventile der Zylinder so gesteuert werden, daß es zu einer größeren Ventilüberschneidung kommt. Dadurch entsteht ein größerer Luftdurchsatz und Druck auf die Turbine, so daß ein höherer Ladedruck aufgebaut werden kann.

### Zeichnung

Anhand eines in der Zeichnung dargestellten Ausführungsbeispiels wird nachfolgend die Erfindung näher erläutert. Es zeigen:
Figur 1 eine schematische Darstellung einer direkteinspritzenden Brennkraftmaschine mit einem Abgasturbolader und
Figur 2 ein Ablaufdiagramm zur Steuerung der Nacheinspritzung.

### Beschreibung eines Ausführungsbeispiels

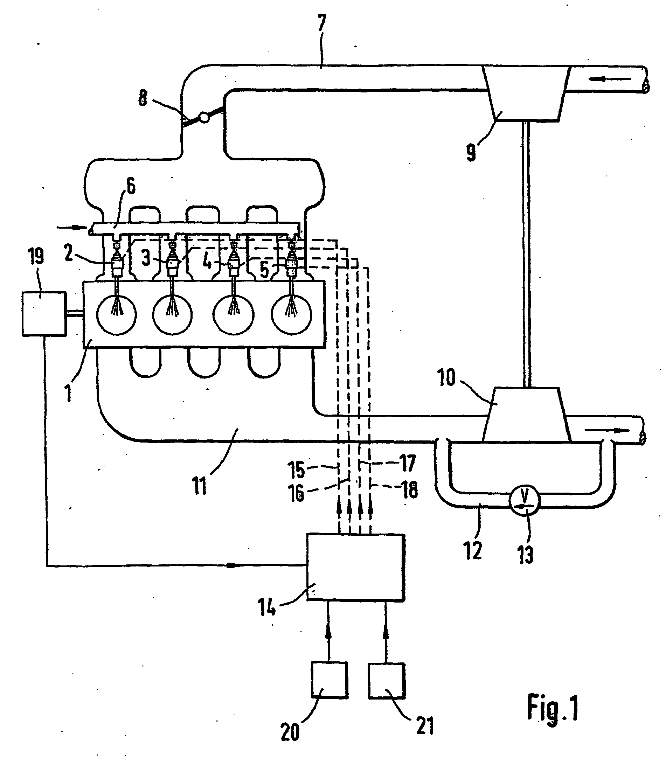

In der Figur 1 ist schematisch eine direkteinspritzende Brennkraftmaschine 1 mit z.B. vier Zylindern und zugehörigen Einspritzventilen 2, 3, 4 und 5 dargestellt. Den Einspritzventilen 2, 3, 4 und 5 wird der Kraftstoff z.B. über eine gemeinsame Leitung 6,zugeführt. Die direkteinspritzende Brennkraftmaschine 1 kann ein Diesel- oder ein Ottomotor sein.

Die dargestellte Brennkraftmaschine ist mit einem Abgasturbolader ausgestattet. Dabei ist im Ansaugkanal 7, in dem sich auch eine Drosselklappe 8 befindet, ein Verdichter 9 angeordnet, der mit einer Turbine 10 mechanisch gekoppelt ist, die vom Abgasstrom im Abgaskanal 11 angetrieben wird. Die Turbine 10 ist in bekannter Weise von einer Bypassleitung 12 überbrückt, in der ein Bypassventil 13 angeordnet ist, womit der vom Turbolader erzeugte Ladedruck gesteuert werden kann.

Zur Steuerung bzw. Regelung der Kraftstoffeinspritzung ist eine Steuereinheit 14 vorgesehen, die mit jedem einzelnen Einspritzventil 2, 3, 4 und 5 über eine Steuerleitung 15, 16, 17 und 18 verbunden ist. Von einem mit der Brennkraftmaschine 1 gekoppelten Getriebe 19 erhält die Steuereinheit 14 eine Information darüber, ob der Fahrer die Kupplung betätigt und einen Gang eingelegt hat oder, bei einem automatischen Getriebe, ob er eine Fahrstufe eingelegt hat. Außerdem erhält die Steuereinheit 14 noch Informationen von Sensoren 20 und 21, welche die Fahrpedalstellung und die Bremspedalstellung bzw. den Schaltzustand des Bremslichts erfassen.

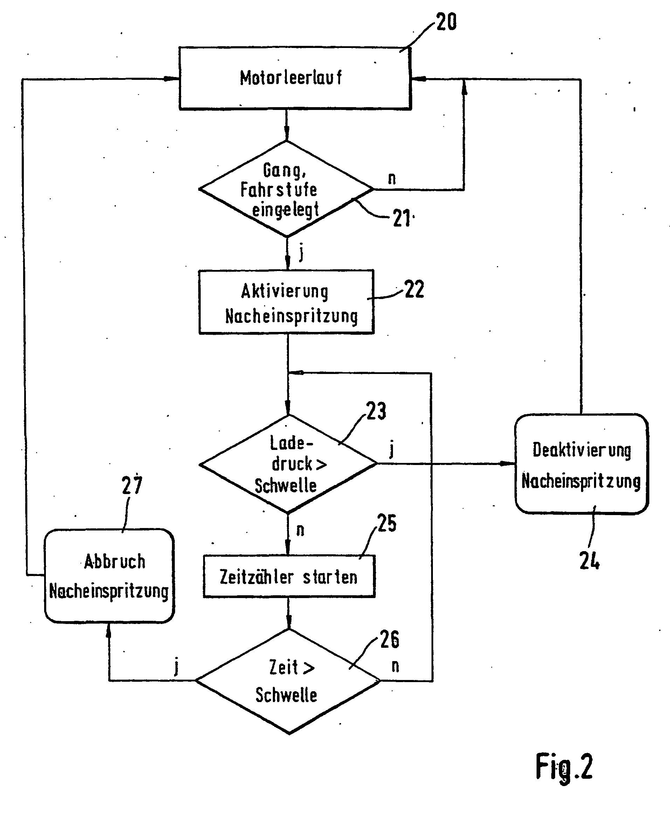

Wie anhand des in der Figur 2 dargestellten Ablaufdiagramms nachfolgend erläutert wird, steuert das Steuergerät 14 die Einspritzventile 2, 3, 4 und 5 so an, daß zumindest vor (evt1. auch noch während) einem Anfahrvorganges neben einer Primäreinspritzung zusätzlich eine Nacheinspritzung erfolgt. Und zwar wird die Nacheinspritzung gegen Ende des Expansionshubes des Kolbens in ein oder mehreren Zylindern initiiert.

Es sind Maßnahmen zu ergreifen, um einen bevorstehenden Anfahrvorgang rechtzeitig zu erkennen, damit die Nacheinspritzung noch vor dem Anfahrvorgang erfolgt und dadurch ein erhöhter Ladedruck ohne großen Zeitverzug beim Anfahren zur Verfügung steht. Nachfolgend sind einige auf Aktionen des Fahrers zurückgehende Anzeichen für einen bevorstehenden Anfahrvorgang aufgeführt. Z.B kann das Einlegen eines Getriebeganges durch den Fahrer während des Leerlaufs ein Anzeichen für einen Anfahrvorgang sein. Eine Information über eine solche Aktion erhält die Steuereinheit 14 vom Getriebe oder einer Getriebesteuerung 19. Bei einem automatischen Getriebe kann das Einlegen einer Fahrstufe als Anzeichen für einen Anfahrvorgang gewertet werden. Ein weiteres Anzeichen kann die Freigabe des Bremspedals sein, wenn also der Fahrer seinen Fuß vom Bremspedal nimmt und zum Fahrpedal wechselt. Die Freigabe-des Bremspedals kann daran vom Sensor 20 erkannt werden, daß das Bremslicht abschaltet. Auch kann alternativ in den Ansprüchen die Betätigung des Fahrpedals im Leerlauf als Indiz für einen bevorstehenden Anfahrvorgang gewertet werden. Mit dem Fahrpedalsensor 21 kann dann der Pegel und/oder der Gradient des Fahrpedalsignals erfaßt und in Abhängigkeit davon in der Steuereinheit 14 auf einen Anfahrvorgang entschieden werden.

Durch die zusätzlichen Nacheinspritzung in ein oder mehrere Zylinder wird die Abgasenthalpie sprungartig erhöht. Denn die zusätzlich eingespritzte Kraftstoffmenge führt zusammen mit dem aufgrund eines vorangegangenen Magerbetriebs vorhandenen hohen restlichen Luftüberschuß in den einzelnen Brennräumen zu einem brennfähigen Gemisch, das sich dann infolge der noch laufenden Verbrennung bzw. der hohen Temperatur entzündet. Reicht der Luftüberschuß nicht aus, muß zusätzlich in den Zylindern, in denen die Nachspritzung erfolgt, ein Luftüberschuß erzeugt werden. Der plötzliche Anstieg der Abgasenthalpie erhöht drastisch die Antriebsleistung für die Turbine 10 des Abgasturboladers, wodurch der vom Verdichter 9 erzeugte Ladedruck im Ansaugrohr 7 ebenfalls stark ansteigt und damit das von der Brennkraftmaschine erzeugte Drehmoment während des Anfahrvorganges deutlich steigert. Infolge des höheren Liefergrades steigt also das spontan abrufbare Drehmoment der Maschine deutlich an, so daß selbst bei Motoren mit kleinem Hubraum ein problemloses Anfahren gewährleistet ist.

Der Ladedruck kann noch weiter dadurch erhöht werden, daß die Ein- und Auslaßventile der Zylinder zu einer größeren Ventilüberschneidung hin gesteuert werden, wodurch ein höherer Luftdurchsatz und Druck auf die Turbine des Turboladers entsteht.

In der Steuereinheit 14 läuft nun folgender in der Figur 2 dargestellter Prozeß ab. Gemäß dem Schritt 20 stellt die Steuereinheit 14 fest, daß sich die Brennkraftmaschine im Leerlauf befindet. Im Schritt 21 erfolgt eine Abfrage, ob ein Gang oder eine Fahrstufe eingelegt worden ist oder andere oben genannte Anzeichen vorliegen, die auf einen bevorstehenden Anfahrvorgang hindeuten. Ist das der Fall, so aktiviert die Steuereinheit 14 im Verfahrensschritt 22 eine Nacheinspritzung in ein oder mehreren Zylindern der Brennkraftmaschine. Die Nacheinspritzung wird solange aufrecht erhalten, bis der Ladedruck eine vorgegebene Schwelle überschreitet. Diese Schwellwertabfrage erfolgt im Verfahrensschritt 23. Hat der Ladedruck die vorgegebene Schwelle überschritten, so erfolgt im verfahrensschritt 24 eine Deaktivierung der Nacheinspritzung.

Solange seit Beginn der Nacheinspritzung die Ladedruckschwelle noch nicht überschritten worden ist, läuft gleichzeitig, wie im Schritt 25 angedeutet, ein Zeitzähler mit. Anschließend erfolgt eine Abfrage 26, ob die gezählte Zeit eine vorgegebene Schwelle überschritten hat oder nicht. Wenn nicht, geht der Ausgang der Abfrage 26 an den Eingang der Abfrage 23 zurück. Falls die Zeitschwelle tatsächlich überschritten worden ist, wird die Nacheinspritzung sprungartig abgebrochen oder allmählich abgeregelt. Mit dieser Zeitabfrage soll festgestellt werden, ob nach Erkennen eines Anfahrindizes eine der Zeitschwelle entsprechende Zeit abgelaufen ist, ohne daß es zu einem tatsächlichen Anfahren des Fahrzeugs kam. Diese zeitliche Begrenzung für die Erhöhung der Abgasenthalpie wird zum Schutz des Abgasturboladers durchgeführt. Würde nämlich die erhöhte Energie nicht in mechanische Energie zum Antrieb des Fahrzeugs umgesetzt, so wären mechanische oder thermische Überlastungen der Maschine und/oder des Turboladers die Folge. Außerdem würde es zu einer Geräuschbelästigung für den Fahrer sowie zu einer unnötigen Erhöhung des Kraftstoffverbrauchs kommen.

## Patentansprüche

1. Verfahren zur Erhöhung des Drehmoments bei einer direkt einspritzenden Brennkraftmaschine (1) mit einem Abgasturbolader (9, 10, 12, 13), wobei vor einem Anfahrvorgang des Fahrzeugs neben einer Primäreinspritzung eine Nacheinspritzung in ein oder mehrere Zylinder der Brennkraftmaschine (1) veranlasst wird, wobei die Nacheinspritzung dann initiiert wird, sobald ein oder mehrere Aktionen des Fahrers erkannt werden, die auf einen bevorstehenden Anfahrvorgang hinweisen, **dadurch gekennzeichnet, dass** als Anzeichen für einen bevorstehenden Anfahrvorgang aufgefasst wird, wenn der Fahrer während des Leerlaufs der Brennkraftmaschine (1) einen Getriebegang einlegt oder das Bremspedal freigibt oder, bei einem automatischen Getriebe, eine Fahrstufe einschaltet.

2. Verfahren nach einem der vorherigen Ansprüche, **dadurch gekennzeichnet, dass** die Nacheinspritzung gegen Ende des Expansionshubes in ein oder mehreren Zylindern veranlasst wird.

3. Verfahren nach einem der vorherigen Ansprüche, **dadurch gekennzeichnet, dass** vor der Nacheinspritzung in den betroffenen Zylindern ein Luftüberschuss erzeugt wird.

4. Verfahren nach einem der vorherigen Ansprüche, **dadurch gekennzeichnet, dass** die Nacheinspritzung beendet wird, wenn der Ladedruck eine vorgegebene Schwelle ü-berschreitet.

5. Verfahren nach einem der vorherigen Ansprüche, **dadurch gekennzeichnet, dass** die Nacheinspritzung abgebrochen wird, wenn nach Ablauf einer vorgegebenen Zeit, nachdem vom Fahrer Maßnahmen für einen Anfahrvorgang ergriffen worden sind, kein tatsächlicher Anfahrvorgang erfolgt.

6. Verfahren nach einem der vorherigen Ansprüche, **dadurch gekennzeichnet, dass** während der Nacheinspritzung die Ein- und Auslassventile der Zylinder so gesteuert werden, dass es zu einer größeren Ventilüberschneidung kommt.

7. Vorrichtung zur Erhöhung des Drehmoments bei einer direkt einspritzenden Brennkraftmaschine (1) mit einem Abgasturbolader (9, 10, 12, 13), wobei eine Steuereinheit (14) die Kraftstoffeinspritzung in ein oder mehrere Zylinder der Brennkraftmaschine (1) so steuert, dass vor einem Anfahrvorgang neben einer Primäreinspritzung noch eine Nacheinspritzung erfolgt, wobei die Nacheinspritzung dann initiiert wird, sobald ein oder mehrere Aktionen des Fahrers erkannt werden, die auf einen bevorstehenden Anfahrvorgang hinweisen, **dadurch gekennzeichnet, dass** als Anzeichen für einen bevorstehenden Anfahrvorgang aufgefasst wird, wenn der Fahrer während des Leerlaufs der Brennkraftmaschine (1) einen Getriebegang einlegt oder das Bremspedal freigibt oder, bei einem automatischen Getriebe, eine Fahrstufe einschaltet.

## Revendications

1. Procédé pour augmenter le couple de rotation d'un moteur à combustion interne (1) à injection directe avec un turbocompresseur d'échappement (9, 10, 12, 13), selon lequel avant un processus de démarrage du véhicule outre une injection primaire, une post-injection est initiée dans un ou plusieurs cylindre(s) du moteur à combustion interne (1) dès qu'une ou plusieurs action(s) du conducteur sont détectées qui indiquent un processus de démarrage imminent,
**caractérisé en ce que**
l'on considère comme signe pour un processus de démarrage imminent la fait que pendant la marche au ralenti du moteur à combustion interne (1), le conducteur enclenche une vitesse ou libère la pédale de frein ou, en présence d'une transmission automatique, enclenche un cran de marche.

2. Procédé selon la revendication 1,
**caractérisé en ce que**
la post-injection est initiée dans un ou plusieurs cylindre(s) vers la fin de la course d'expansion.

3. Procédé selon l'une quelconque des revendications précédentes,
**caractérisé en ce qu'**
un excédent d'air est généré dans les cylindres concernés avant la post-injection.

4. Procédé selon l'une quelconque des revendications précédentes,
**caractérisé en ce que**
la post-injection est terminée lorsque la pression de charge dépasse un seuil prédéterminé.

5. Procédé selon l'une quelconque des revendications précédentes,
**caractérisé en ce que**
la post-injection est interrompue si suite aux dispositions prises par le conducteur pour un processus de démarrage, aucun processus de démarrage réel n'a lieu après un temps prédéterminé.

6. Procédé selon l'une quelconque des revendications précédentes,
**caractérisé en ce que**
pendant la post-injection, la soupape d'admission et la soupape d'échappement sont commandées pour obtenir un recouvrement plus important.

7. Dispositif pour augmenter le couple de rotation d'un moteur à combustion interne (1) à injection directe comprenant un turbocompresseur à gaz d'échappement (9, 10, 12, 13), dans lequel une unité de commande (14) commande l'injection de carburant dans un ou plusieurs cylindre(s) du moteur à combustion interne (1) de telle sorte qu'avant un processus de démarrage, outre une injection primaire, une post-injection est effectuée, dès qu'une ou plusieurs action(s) du conducteur sont détectées indiquant un processus de démarrage imminent,
**caractérisé en ce que**
l'on considère comme signe d'un processus de démarrage imminent le fait que pendant la marche au ralenti du moteur à combustion interne (1), le conducteur enclenche une vitesse ou libère la pédale de frein ou, en présence d'une transmission automatique, enclenche un cran de marche.

## Claims

1. Method for increasing the torque in a direct injection internal combustion engine (1) with an exhaust gas turbocharger (9, 10, 12, 13), in which prior to the vehicle driving off, in addition to a primary injection an afterinjection into one or more cylinders of the internal combustion engine (1) is triggered, the afterinjection being initiated as soon as one or more actions on the part of the driver which indicate an impending drive-off process are recognized, **characterized in that** indications of an impending drive-off process are regarded as being when the driver, with the internal combustion engine (1) idling, engages a gear or releases the brake pedal or, in the case of an automatic transmission, engages drive.

2. Method according to one of the preceding claims, **characterized in that** the afterinjection is triggered towards the end of the expansion stroke in one or more cylinders.

3. Method according to one of the preceding claims, **characterized in that** prior to the afterinjection an excess of air is generated in the cylinders in question.

4. Method according to one of the preceding claims, **characterized in that** the afterinjection is terminated when the boost pressure exceeds a predetermined threshold.

5. Method according to one of the preceding claims, **characterized in that** the afterinjection is interrupted if no actual drive-off process occurs after the expiry of a predetermined time since the driver took measures indicating a drive-off process.

6. Method according to one of the preceding claims, **characterized in that** during the afterinjection the intake and exhaust valves of the cylinders are controlled in such a way that there is a greater valve overlap.

7. Apparatus for increasing the torque in a direct injection internal combustion engine (1) with an exhaust gas turbocharger (9, 10, 12, 13), a control unit (14) controlling the injection of fuel into one or more cylinders of the internal combustion engine (1) in such a way that prior to the vehicle driving off, in addition to a primary injection an afterinjection is also carried out, the after injection being initiated as soon as one or more actions on the part of the driver which indicate an impending drive-off process are recognized, **characterized in that** indications of an impending drive-off process are regarded as being when the driver, with the internal combustion engine (1) idling, engages a gear or releases the brake pedal or, in the case of an automatic transmission, engages drive.
